# EUROPEAN PATENT APPLICATION

(11) **EP 2 573 977 A1**
(43) Date of publication of application: **27.03.2013**
(21) Application number: 11800074.4
(22) Date of filing: 17.03.2011
(51) Int. Cl.: H04L 12/24

(54) **SUBNET PROTECTION METHOD AND DEVICE FOR TRANSPORT MULTI-PROTOCOL LABEL SWITCHING (TMPLS) NETWORK**

(30) Priority: 28.06.2010 CN 201010211003
(71) Applicant: ZTE Corporation, Shenzhen, Guangdong 518057 (CN)
(72) Inventor: SONG, Xinyi, Shenzhen Guangdong 518057 (CN); GUO, Ping, Shenzhen Guangdong 518057 (CN)
(74) Representative: Howson, Richard G.B.
(86) International application number: PCT/CN2011/071937
(87) International publication number: WO 2012/000329

(57) **Abstract**

A method and device for providing subnet protection in a transport multi-protocol label switching (TMPLS) network are disclosed. The method includes configuring two subnet protection groups in different directions for each intermediate node device, that needs protection, between two terminal devices, determining an operation condition of an operation tunnel link in each of the subnet protection groups, when the operation tunnel link in both the subnet groups are normal, transmitting service data via the operation tunnel links in the two subnet groups, and when failure occurs in the operation tunnel link in the one of the subnet protection groups, switching the service data to the protection tunnel link in the same subnet protection group. Accordingly, bidirectional Label-Switched Path (LSP) protection of a node device tunnel and refined protection of the operation tunnel links are implemented.

## Description

### TECHNICAL FIELD

The disclosure relates to subnet protection techniques in the communication field, and more particularly to a method and device for providing subnet protection in a Transport Multi-Protocol Label Switching (TMPLS) network.

### BACKGROUND

The TMPLS technique is widely used in the field of computer data communication, especially in data bearer networks. The highlights of the TMPLS technique include link protection and node protection. Tunnel protection is an important technique among them, which may be classified into end-to-end linear protection and subnet protection for intermediate nodes, according to application scenarios. In the tunnel protection, a protection group is formed by two tunnel links, one is an operation tunnel link and the other one is a protection tunnel link. Switching of service data between the two tunnel links is implemented and the operation condition of the protection group is maintained under an Auto-Protection Switching (APS) protocol.

Based on the tunnel protection mechanism, the end-to-end linear protection is implemented by the following method, in which a switch may be performed on the protection group when failure occurs in a link between any two nodes between two terminal devices, i.e. the protection group is switched from a current operation tunnel link to a protection tunnel link. The subnet protection is implemented in the same manner as the method for implementing the end-to-end linear protection, i.e. when failure occurs in an operation tunnel link in a subnet protection group for a node in a link, service data are switched to the protection tunnel link in the subnet protection group.

However, several defects lie in the currently used protection methods. Specifically, with regard to the end-to-end linear protection method, although service data transmitted on a failed link can be transferred to the protection tunnel link to be transmitted, service data on a failure-free link also needs to be transferred because an switching operation is performed whenever failure occurs on any link between two terminal devices, and since minor loss of service data will be caused during the link switching process, some service data transmitted on the failure-free link may be also lost to cause unnecessary loss to service data transmitted on the normal link, i.e. locally refined protection of the failed link cannot be assured, thus influencing good operation of services.

Following defects lie in the subnet protection of intermediate nodes: since transmission tunnels of current intermediate node devices are provided with bidirectional Label-Switched Paths (LSP) for transmitting uplink service data and downlink service data respectively, while just unidirectional LSP protection is provided in existing node devices, once failure occurs in an opposite LSP of an operation tunnel link, service data flows will be interrupted and abnormal operation of services will be caused. For example, provided that three node devices, P1, P2 and P3 are provided between two terminal devices of a TMPLS network sequentially, for the node device P2, protection can be only performed for the P2-to-P3 or P2-to-P1 LSPs. Then, service data flows will be interrupted once failure occurs in a P2-to-P1 or P2-to-P3 LSP, thus influencing normal operation of services.

### SUMMARY

In view of the above, the disclosure provides a method and device for providing subnet protection in a TMPLS network, which implement not only bidirectional LSP protection of a node device tunnel, but also refined protection of an operation tunnel link.

The technical solutions of the disclosure are implemented as follows.

The disclosure provides a method for providing subnet protection in a transport multi-protocol label switching (TMPLS) network is disclosed, which includes configuring two subnet protection groups in different directions for each intermediate node device, that needs protection, between two terminal devices; determining the operation condition of the operation tunnel link in each of the subnet protection groups; transmitting the service data via the operation tunnel link in the two subnet groups when the operation tunnel link in both the subnet groups are normal; and when failure occurs in the operation tunnel link in the one of the subnet protection groups, switching the service data to the protection tunnel link in the same subnet protection group.

Preferably, the method may further include: once the failed operation tunnel link is recovered, switching the service data back to the operation tunnel link in the same subnet protection group.

Preferably, the intermediate node device may detect operation tunnel links by using an operation, administration and maintenance (OAM) technique for the TMPLS, in determining the operation condition of the operation tunnel links in the subnet protection groups.

Preferably, the directions of the two subnet protection sets may be the same with two directions corresponding to a bidirectional LSP of a transmission tunnel.

Preferably, the switching operation of the service data may be performed under an APS protocol.

Preferably, the method may further include: performing, by the intermediate node device, switching operation on the service data when switching is performed forcibly for the subnet protection groups.

The disclosure also provides a device for providing subnet protection in a transport multi-protocol label switching (TMPLS) network is disclosed, the device is located within an intermediate node device which needs protection and is configured with two subnet protection groups in different directions, and includes a configuration module and a determining and processing module, wherein the configuration module is adapted to configure two subnet protection groups in different directions for each intermediate node device which needs protection and to send a configuration result to the determining and processing module; and the determining and processing module is adapted to determine the operation condition of operation tunnel links in each of the two subnet protection groups configured by the configuration module, and to transmit service data via the operation tunnel links in the two subnet protection groups when determining that the operation tunnel links are normal, and to switch the service data to protection tunnel link in the same subnet protection group when determining that failure occurs in the operation tunnel link.

Preferably, the determining and processing module may be further adapted to switch the service data back to the operation tunnel link in the same subnet protection group when determining that the failed operation tunnel link is recovered.

Preferably, the determining and processing module may perform the switching operation for the service data under an APS protocol.

The determining and processing module may be further configured to, when being switching forcibly, perform switching operation for the service data.

According to the method and device for providing subnet protection in a transport multi-protocol label switching (TMPLS) network, two subnet protection groups in different directions are configured for each intermediate node device, that needs protection, between two terminal devices, the operation condition of the operation tunnel link in each of the subnet protection groups is determined, the service data are transmitted via the operation tunnel links in the two subnet groups when the operation tunnel link in both the subnet groups are normal, and when failure occurs in the operation tunnel link in the one of the subnet protection groups, the service data are switched to the protection tunnel link in the same subnet protection group. In the disclosure, since two subnet protection groups in different directions are configured for the intermediate node devices, when failure occurs in the operation tunnel link of the subnet protection group in either direction, service data transmitted subsequently may be switched to the protection tunnel link of the subnet protection group in the same direction, thus implementing bidirectional LSP protection of a node device tunnel, avoiding interruption of service data flows, and ensuring normal operation of services.

Additionally, according to the subnet protection method of the disclosure, if failure occurs in a certain link, it only needs to switch the service data to the protection link in the corresponding subnet protection group, and there is no need to switch service data in other links, thus avoiding influence on normal operation of other links and implementing refined protection of operation tunnel links.

### BRIEF DESCRIPTION OF THE DRAWINGS

Fig. 1 is a flowchart of a method for providing subnet protection in the TMPLS network according to the disclosure;
Fig. 2 to Fig. 5 are schematic diagrams illustrating service data transmission paths in various switching scenarios of subnet protection groups in the embodiments of the disclosure; and
Fig. 6 is a schematic view of the structure of a device for providing subnet protection in the TMPLS network according to the disclosure.

### DETAILED DESCRIPTION

The basic concept of the disclosure lies in configuring two subnet protection groups in different directions for each intermediate node device, that needs protection, between two terminal devices, determining the operation condition of the operation tunnel link in each of the subnet protection groups, transmitting the service data via the operation tunnel links in the two subnet groups when the operation tunnel links in both the subnet groups are normal; and when failure occurs in the operation tunnel link in the one of the subnet protection groups, the service data are switched to the protection tunnel link in the same subnet protection group;

Further, if the failed operation tunnel link is recovered, the service data are then switched back to the operation tunnel link in the same subnet protection group.

Here, in configuring the two subnet protection groups, all or some of the intermediate node devices may be configured with two subnet protection groups in different directions, according to networking requirements.

The disclosure is described below in detail in conjunction with the accompanying drawings and embodiments.

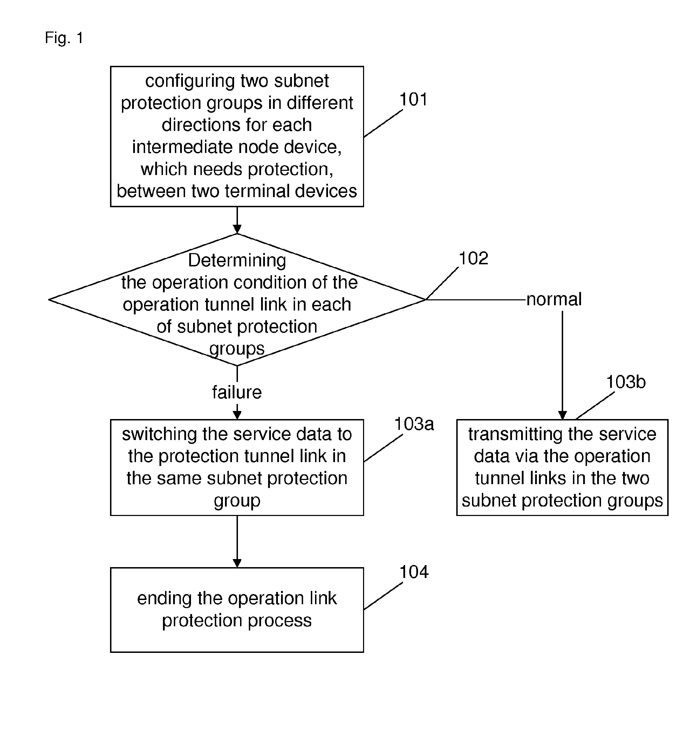

Fig. 1 is a flowchart of a method for implementing a subnet protection in the TMPLS network according to the disclosure. As shown in Fig. 1, the method includes the following steps:
Step 101: configuring two subnet protection groups in different directions for each intermediate node device, that needs protection, between two terminal devices.

Specifically, the two subnet groups are configured respectively for all or some of the intermediate node devices, that need protection, between two terminal devices, according to service requirements, i.e. the operation tunnel link and the protection tunnel link in each of the two directions are configured for each intermediate node device that needs protection.

Here, the two directions may be set to be an east direction and a west direction. Accordingly, each intermediate node device that needs protection may be configured with east operation tunnel links, east protection tunnel links, west operation tunnel links and west protection tunnel links. The specific way for configuring the subnet protection group is the same as the existing way for configuring a unidirectional subnet protection group and the description thereof will not be omitted here.

For example, provided that three intermediate node devices P1, P2 and P3 are provided between two terminal devices in a TMPLS network sequentially, the intermediate node device P2 is configured with a P2-to-P3 and P2-to-P1 subnet protection groups.

Here, the east and west directions corresponding to the subnet protection groups are the same as the two directions corresponding to bidirectional LSPs of a transmission tunnel, and may be also understood as an uplink direction and a downlink direction.

Step 102: determining the operation condition of the operation tunnel link in the two subnet protection group, performing Step 103a if failure occurs in an operation tunnel link, and performing Step 103b if the operation tunnel links are normal.

Here, existing TMPLS operation, administration and maintenance (OAM) techniques may be employed to detect the operation tunnel links regularly, in determining the operation condition of the operation tunnel link in each of the two subnet protection groups. If it is detected that failure occurs in one of the operation tunnel links, Step 103a will continue to be performed, and if the operation tunnel links are normal, then Step 103b will be performed.

Step 103a: switching the service data to the protection tunnel link in the same subnet protection group and then performing Step 104;

Specifically, the intermediate node device switches service data subsequently transmitted on the failed operation tunnel link to the protection tunnel link in the same subnet protection group, and then Step 104 is performed.

The switching process may be still performed under the existing APS protocol.

In the disclosure, the switching operation may be performed when switching is performed forcibly on the subnet protection group.

Step 103b: still transmitting the service data via the operation tunnel links in the two subnet protection groups.

Here, taking the settings in Step 101 for example, the service data are still transmitted via the operation tunnel links in the east and west subnet protection groups.

Step 104: ending the operation tunnel link protection process.

Further, in the method, if the failed operation tunnel link is recovered, the service data are then switched back to the operation tunnel link in the same subnet protection group.

If the failed operation tunnel link in the east protection group is recovered, the service data are switched from the protection tunnel link in the east protection group back to the operation tunnel link in the east protection group.

The disclosure is described in detail below in conjunction with the embodiments.

In the present embodiment, a TMPLS network is composed of two terminal devices PE1 and PE2, and three intermediate node devices P1, P2 and P3. The intermediate node device P2 is configured with two subnet protection groups in different directions (east and west). More specifically, the P2-to-P1 subnet protection group for the intermediate node device is referred to as a west subnet group and the P2-to-P3 subnet protection group for the intermediate node device is referred to as an east subnet group. In addition, a unidirectional subnet protection group or bidirectional subnet protection groups may also be configured for P2 and/or P3. The implementation process of the method of the present embodiment is described below by only taking the node device P2 as a research object. The method specially includes the following steps:
Step 201: The operation tunnel links in the two subnet protection groups are in a normal operation condition.

Specifically, service data are transmitted via the operation tunnel links in the west and east subnet protection groups of the intermediate node device P2.

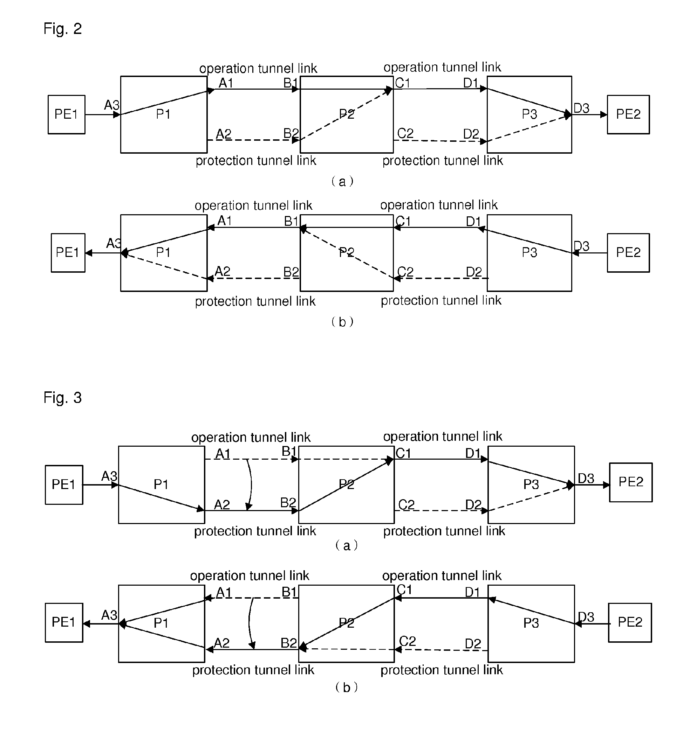

Transmission paths of the service data in the present step are shown in Fig. 2. The solid lines as shown in Fig. 2 indicate the transmission paths of the service data and the dashed lines as shown indicate paths on which no service data are transmitted currently. The transmission paths as shown in Fig. 2(a) may represent an uplink direction, i.e. transmission paths of east service data, and the transmission paths as shown in Fig. 2(b) may represent a downlink direction, i.e., transmission paths of west service data.

Step 202: when failure occurs in the operation tunnel link in the west subnet protection group, or the operation tunnel link in the west subnet protection group is switched forcibly, the service data are switched to the protection tunnel link in the west subnet protection group.

At this moment, the service data are switched from the operation tunnel link in the west subnet protection group to the protection tunnel link in the west subnet protection group, and will be transmitted on the protection tunnel link in the west subnet protection group and the operation tunnel link in the east subnet protection group.

The Transmission paths of the service data in the present step are as shown in Fig. 3. The solid lines as shown in Fig. 3 indicate the transmission paths of the service data and the dashed lines as shown indicate paths on which no service data are transmitted currently. The transmission paths as shown in Fig. 3(a) may represent an uplink direction, i.e. transmission paths of east service data, and the transmission paths as shown in Fig. 3(b) may represent a downlink direction, i.e., transmission paths of west service data.

Step 203: when failure occurs in the operation tunnel links in the east subnet protection group, or the operation tunnel links in the east subnet protection group are switched forcibly, the service data are switched to protection tunnel links in the east subnet protection group.

At this moment, the service data are switched from the operation tunnel link in the east subnet protection group to the protection tunnel link in the east subnet protection group, and will be transmitted on the protection tunnel link in the west subnet protection group and the protection tunnel link in the east subnet protection group.

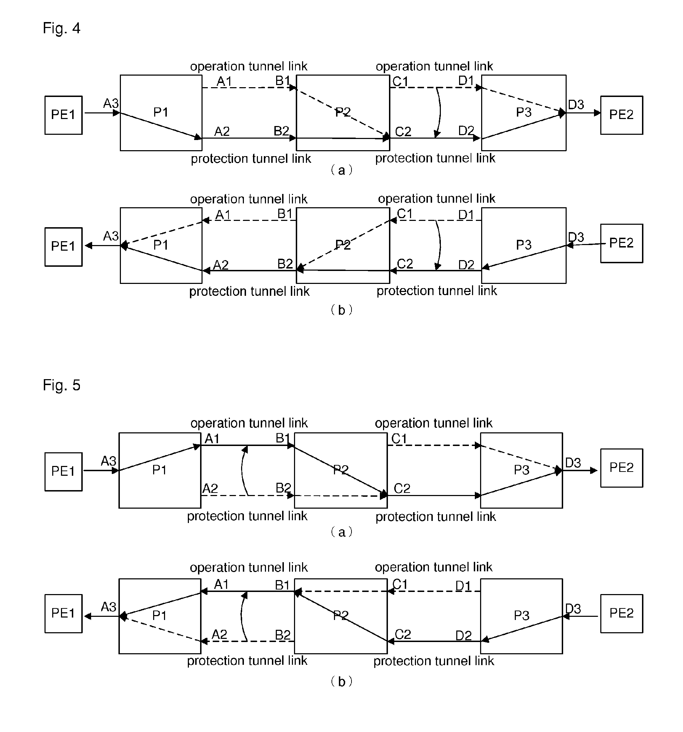

The Transmission paths of the service data in the present step are shown in Fig. 4. The solid lines as shown in Fig. 4 indicate the transmission paths of the service data and the dashed lines as shown indicate paths on which no service data are transmitted currently. The transmission paths as shown in Fig. 4(a) may represent an uplink direction, i.e. transmission paths of east service data, and the transmission paths as shown in Fig. 4(b) may represent a downlink direction, i.e., transmission paths of west service data.

Step 204: when the operation tunnel link in the west subnet protection group is recovered, or switched back forcibly, the service data are switched back to the operation tunnel link in the west subnet protection group from the protection tunnel link in the west subnet protection group.

At this moment, the service data are switched from the protection tunnel link in the west subnet protection group to the operation tunnel link in the west subnet protection group, and will be transmitted on the operation tunnel link in the west subnet protection group and the protection tunnel link in the east subnet protection group.

The Transmission paths of the service data in the present step are shown in Fig. 5. The solid lines as shown in Fig. 5 indicate the transmission paths of the service data and the dashed lines as shown indicate paths on which no service data are transmitted currently. The transmission paths as shown in Fig. 5(a) may represent an uplink direction, i.e. transmission paths of east service data, and the transmission paths as shown in Fig. 5(b) may represent a downlink direction, i.e., transmission paths of west service data.

Step 205: when the operation tunnel link in the east subnet protection group is recovered, or switched back forcibly, the service data are switched back to the operation tunnel link in the east subnet protection group from the protection tunnel link in the east subnet protection group.

At this moment, the service data are switched from the protection tunnel link in the east subnet protection group to the operation tunnel link in the east subnet protection group, and will be transmitted on the operation tunnel link in the west subnet protection group and the operation tunnel link in the east subnet protection group, i.e., returns to the initial state as shown in Step 201. The Transmission paths of the service data in the present step are shown in Fig. 2 and the same as those in Step 201.

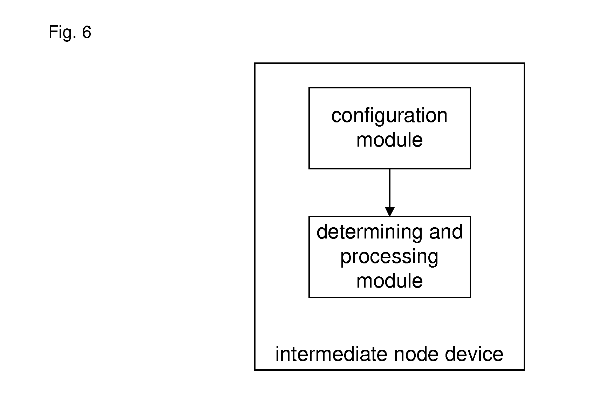

To implement the method as described above, the disclosure further provides a device for providing subnet protection in the TMPLS network. As shown in Fig. 6, the device is located within each intermediate node device which needs protection and thus is configured with two subnet protection groups in different directions. The device may include a configuration module and a determining and processing module.

The configuration module is adapted to configure two subnet protection groups in different directions for each intermediate node device which needs protection and to send a configuration result to the determining and processing module;
the determining and processing module is adapted to determine the operation condition of operation tunnel links in the two subnet protection groups configured by the configuration module, and to transmit service data via the operation tunnel links in the two subnet protection groups when determining that the operation tunnel links are normal, and to switch the service data to the protection tunnel link in the same subnet protection group when determining that failure occurs in the operation tunnel link.

The determining and processing module is further adapted to switch the service data back to the operation tunnel link in the same subnet protection group when determining that the failed operation tunnel link is recovered,

The determining and processing module performs the switching operation on the service data under an APS protocol.

The determining and processing module is further adapted to perform switching operation for the service data when switching is performed on the subnet protection groups forcibly.

What are described above are only preferred embodiments of the disclosure, and are not intended to limit the protection scope of the disclosure, and any modifications, equivalent replacements, improvements and the like within the disclosure shall fall within the scope of protection of the disclosure.

## Claims

1. A method for providing subnet protection in a transport multi-protocol label switching (TMPLS) network, comprising:
configuring two subnet protection groups in different directions for each intermediate node device, that needs protection, between two terminal devices;
determining an operation condition of an operation tunnel link in each of the subnet protection groups;
when the operation tunnel links in the two subnet groups are normal, transmitting service data via the operation tunnel links in the two subnet groups; and
when failure occurs in the operation tunnel link in one of the subnet protection groups, switching the service data to a protection tunnel link in the same subnet protection group.

2. The method for providing subnet protection in the TMPLS network according to claim 1, further comprising:
once the failed operation tunnel link is recovered, switching the service data back to the operation tunnel link in the same subnet protection group.

3. The method for providing subnet protection in the TMPLS network according to claim 1 or 2, wherein the intermediate node device detects the operation tunnel links by using an operation, administration and maintenance (OAM) technique for the TMPLS, in determining the operation condition of the operation tunnel links in the subnet protection groups.

4. The method for providing subnet protection in the TMPLS network according to claim 1 or 2, wherein the directions of the two subnet protection groups are as same as the directions corresponding to bidirectional label switching paths (LSPs) of a transmission tunnel.

5. The method for providing subnet protection in the TMPLS network according to claim 1 or 2, wherein the switching operation of the service data is performed under an Auto-Protection Switching (APS) protocol.

6. The method for providing subnet protection in the TMPLS network according to claim 1 or 2, further comprising: performing, by the intermediate node device, a switching operation for the service data when switching is performed forcibly on the subnet protection groups.

7. A device for providing subnet protection in a transport multi-protocol label switching (TMPLS) network, located within an intermediate node device which needs protection and is configured with two subnet protection groups in different directions, the device comprising a configuration module and a determining and processing module, wherein
the configuration module is adapted to configure two subnet protection groups in different directions for each intermediate node device which needs protection and to send a configuration result to the determining and processing module, and
the determining and processing module is adapted to determine an operation condition of an operation tunnel link in each of the two subnet protection groups configured by the configuration module, and to transmit service data via the operation tunnel links in the two subnet protection groups when determining that the operation tunnel links are normal, and to switch the service data to protection tunnel link in the one of the subnet protection groups when determining that failure occurs in the operation tunnel link in the same subnet protection group.

8. The device for providing subnet protection in the TMPLS network according to claim 7, wherein the determining and processing module is further adapted to switch the service data back to the operation tunnel link in the same subnet protection group when determining that the failed operation tunnel link is recovered.

9. The device for providing subnet protection in the TMPLS network according to claim 7 or 8, wherein the determining and processing module performs the switching operation for the service data under an APS protocol.

10. The device for providing subnet protection in the TMPLS network according to claim 7 or 8, wherein the determining and processing module is further adapted to perform switching operation for the service data when switching is performed for the subnet protection group forcibly.
